# EUROPÄISCHE PATENTANMELDUNG

(11) **EP 4 080 410 A1**
(43) Veröffentlichungstag der Anmeldung: **26.10.2022**
(21) Anmeldenummer: 21170044.8
(22) Anmeldetag: 23.04.2021
(51) Int. Cl.: G06K 19/077, G06Q 10/08

(54) **IDENTIFIZIERUNGSEINHEIT ZUR ANBRINGUNG AN EINEM LOGISTIKOBJEKT, BRIEF ODER PAKET**

(71) Anmelder: Römpp, Willi, 72516 Heudorf (DE)
(72) Erfinder: Römpp, Willi, 72516 Heudorf (DE)
(74) Vertreter: Otten, Roth, Dobler & Partner mbB Patentanwälte

(57) **Zusammenfassung**

Es wird eine Identifizierungseinheit zur Anbringung an einem Logistikobjekt, Brief oder Paket mit wenigstens einer schaltbaren optischen Statusanzeige vorgeschlagen, die wenigstens teilweise die Nachteile des Standes der Technik verbessert. Dies wird erfindungsgemäß dadurch erreicht, dass die Identifizierungseinheit derart ausgebildet ist, dass die Statusanzeige wenigstens auf zwei Seiten gleichzeitig und/oder über wenigstens eine Kante des Logistikobjekts, Briefs oder Pakets anordenbar ist.

## Beschreibung

Die Erfindung betrifft eine Identifizierungseinheit zur Anbringung an einem Logistikobjekt, Brief oder Paket mit wenigstens einer schaltbaren optischen Statusanzeige gemäß dem Oberbegriff des Anspruchs 1.

### Stand der Technik

Aus dem Stand der Technik sind Smart-Labels bekannt, welche auf e-Paper-Basis die Lieferadresse anzeigen und gegebenenfalls dynamisch über LPWAN oder öffentliche Wi-Fi hotspots geupdatet werden können.

Die Patentschrift WO 2018/060256 A1 beschreibt weiter ein flächiges elektronisches Bauteil, das als Etikett genutzt werden kann, bei dem die Steuerelektronik auch eine Kommunikationseinheit zur Kommunikation mit externen Geräten umfassen kann, sodass das Bauteil auch eine externe Aktivierung und/oder Regulierung ermöglicht wird, wodurch das elektronische Bauteil zum Leuchten gebracht werden kann.

### Aufgabe und Vorteile der Erfindung

Aufgabe der Erfindung ist es demgegenüber, eine günstige und energiesparsame Identifizierungseinheit zur Anbringung an einem Logistikobjekt, Brief oder Paket mit wenigstens einer schaltbaren optischen Statusanzeige vorzuschlagen, die die Identifizierung eines Logistikobjekts in einem Lager oder Zustellfahrzeug erleichtert.

Als Logistikobjekt werden hier Objekte in der Logistik und weiteren Lagerung bezeichnet und umfassen somit lagerbare Materialien und Waren, wie beispielsweise Fertigungsmaterialien, Hilfs- und Betriebsstoffe, Zuliefer- und Ersatzteile, Handelswaren, Halb- und Fertigerzeugnisse sowie Reststoffe bzw. deren Verpackung oder Einband oder dergleichen. Eine Verwendung im Bereich der vorübergehenden Lagerung, z.B. im Transport- und Logistikbereich, ist genauso denkbar wie eine Anwendung bei einer dauerhaften Lagerung, z.B. von Ersatzteilvorräten oder auch von Büchern, Ordnern oder dergleichen.

Diese Aufgabe wird, ausgehend von einer Identifizierungseinheit der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Identifizierungseinheit dadurch aus, dass die Identifizierungseinheit derart ausgebildet ist, dass die Statusanzeige wenigstens auf zwei Seiten gleichzeitig und/oder über wenigstens eine Kante des Logistikobjekts, Briefs oder Pakets anordenbar ist. Auf diese Weise kann nicht nur eine einfachere Erkennung des Logistikobjekts in einer größeren Menge an bevorrateten bzw. gelagerten Logistikobjekten, es ist auch eine große Zeit- und somit auch Kostenersparnis möglich.

Mit Hilfe einer derartiger Identifizierungseinheit, kann sichergestellt werden, dass unabhängig mit welcher Orientierung das Logistikobjekt in einem Regal gelagert wird immer eine Fläche des Logistikobjekts mit einer optischen Statusanzeige sichtbar ist. Dabei reicht es beispielsweise bei Briefen oder anderen im Wesentlichen zweidimensionalen Logistikobjekten, wenn die Identifizierungseinheit über eine Kante und auf zwei Flächen angeordnet ist. So ist es irrelevant, ob eine Fläche des Briefs oder ob von dem Brief beispielsweise zwischen anderen Briefen stehend nur eine Kante sichtbar ist: Es ist jeweils wenigstens ein Teil der Identifizierungseinheit sichtbar, sodass eine Identifizierung nach Schalten der optischen Statusanzeige einfach möglich ist.

Bei Paketen oder anderen dreidimensionalen Logistikobjekten hat es sich gem. der Erfindung nunmehr als vorteilhaft herausgestellt, dass die Identifizierungseinheit über wenigstens zwei Kanten und auf drei Flächen angeordnet ist. Bei quaderförmigen Logistikobjekten ist es dabei sinnvoll, drei Flächen zu wählen, welche sich nicht gegenüber liegen. Dies birgt den großen Vorteil, dass bei einer Lagerung des Logistikobjekts immer ein Teil der Identifizierungseinheit sichtbar ist, ohne dass man vorab wissen muss, in welcher Orientierung das Logistikobjekt am Ende beispielsweise in einem Regal gelagert wird.

Der Benutzer kann das Logistikobjekt, ohne lange nachzudenken, so lagern, das zumindest eine Seite der Identifizierungseinheit sichtbar ist.

Auch bei einer sich im Laufe der Zeit geänderter Orientierung bei der Lagerung muss die Identifizierungseinheit nicht erneut angebracht werden, wie es bei einer anderen Anbringung der Fall wäre.

Ein Logistikarbeiter oder Paketzulieferer kann die Statusanzeige der Identifizierungseinheit aktivieren und dadurch schalten, bekommt durch die besondere Anordnung immer ein sichtbares optisches Signal angezeigt und kann das jeweilige Logistikobjekt identifizieren.

Im gesamten Logistikprozess kann ein so ausgebildetes Logistikobjekt mehrfach für Zeitersparnis sorgen, da es bei jedem Arbeitsschritt einem Logistikarbeiter vereinfacht, das Logistikobjekt zu identifizieren.

Vorteilhafterweise ist an der Identifizierungseinheit wenigstens eine Sollknickstelle vorgesehen, die an den Kanten des Logistikobjekts angeordnet werden. Dies erleichtert die Anbringung an dem jeweiligen Logistikobjekt.

Bevorzugt ist die optische Statusanzeige binär schaltbar und als passive Anzeigetechnik, insbesondere das Umgebungslicht reflektierend, ausgebildet. Eine solche Ausführung hat den Vorteil, dass nur sehr wenig Energie für eine Änderung der Statusanzeige aufgebracht werden muss. Zudem sind passive Anzeigetechniken wie elektronisches Papier heutzutage preiswert verfügbar.

Vorzugsweise ist die optische Statusanzeige dazu ausgebildet, eine Farbveränderung und/oder einen Helligkeitswechsel darzustellen, um einen Statuswechsel anzuzeigen, wobei die Statusanzeige kontaktlos, insbesondere durch elektromagnetische Wellen, aktivierbar ist. Je deutlicher diese Farbveränderung und/oder der Helligkeitswechsel ist bzw. je deutlicher sich diese Änderung von der restlichen Umgebung abhebt, desto einfacher ist die anschließende Identifizierung.

Es ist daher von Vorteil, wenn ein möglichst kontrastreicher Farbwechsel vollzogen wird wie exemplarisch von Weiß zu Schwarz, aber auch andere helle und dunkle Farben sind denkbar. Der Farb- oder Helligkeitswechsel kann auch mehrfach hintereinander erfolgen, sodass eine Art Blinken entsteht, welches für das menschliche Auge noch leichter und schneller erkennbar ist.

Ebenso vorteilig ist eine kontaktlose Aktivierung der Statusanzeige, sodass diese den Farb- oder Helligkeitswechsel ausführt. So kann dieser auch aus gewissem Abstand generiert werden.

Vorzugsweise weist die Statusanzeige wenigstens eine Antenne, insbesondere eine Loopantenne, zur Signalaufnahme und zur Aktivierung auf, wobei die Antenne insbesondere in die Identifizierungseinheit integriert ist. Diese Aktivierung bewirkt ein Umschalten der Statusanzeige von einem Status zu einem anderen. Dies kann beispielsweise durch einen Helligkeits- oder Farbwechsel der Statusanzeige dargestellt werden. Um die Antenne möglichst von äußeren Einflüssen zu schützen, kann diese in die Identifizierungseinheit integriert sein. Zudem kann somit die Dicke in vorteilhafterweise reduziert werden.

Idealerweise ist in wenigstens zwei Abschnitten der Identifizierungseinheit, welche jeweils auf wenigstens einer Seite des Logistikobjekts, Briefs oder Pakets angebracht sind, wenigstens eine Antenne zur Signalaufnahme vorgesehen, insbesondere eine gemeinsame Antenne über wenigstens zwei der Seiten. Aufgrund der Anbringung der Identifizierungseinheit auf verschiedenen Seiten des Logistikobjekts sind die Antennen in räumlich verschiedenen zueinander angeordnet. Dadurch ist der Empfang der Wellen verbessert und unabhängiger von der Richtung, aus der das gesendete Signal kommt.

Vorteilhafterweise ist die Identifizierungseinheit derart ausgebildet, dass die zur Anzeige eines Statuswechsels an der optischen Statusanzeige benötigte Energie über die wenigstens eine Antenne aufgenommen wird. Die Energie wird dabei von der Antenne dem elektromagnetischen Feld des ausgesandten Signals entnommen und als Kapazität in der Identifizierungseinheit gespeichert.

Bevorzugt ist die Identifizierungseinheit mit einem RFID-Chip ausgestattet. RFID- Chips sind eine ausgereifte Technik und daher kostengünstig zu beziehen.

In einer möglichen Ausführung ist die Identifizierungseinheit mit einem Energiespeicher ausgestattet, welcher kontaktlos ladbar ausgebildet ist. Die Identifizierungseinheit kann so über einen längeren Zeitraum gegebenenfalls wiederholt aktiviert werden. Die kontaktlose Ladbarkeit hat den Vorteil, dass die einzelnen Identifizierungseinheiten nicht aufwendig separat via Kabel geladen werden müssen sondern beispielsweise während der Verweildauer auf einem Förderband oder während der Lagerung in einem Regal geladen werden können.

Denkbar ist, dass ein Signalgeber für akustische Signale vorgesehen ist, der dazu ausgebildet ist, bei Statusänderung ein akustisches Signal zu erzeugen. Ein akustisches Signal kann eine andere oder gar weitere Möglichkeit, das Logistikobjekt in einem Lager zu orten und zu identifizieren.

Von Vorteil ist eine Ausgestaltung, bei der die Identifizierungseinheit wenigstens eine weitere Antenne umfasst, wobei die wenigstens eine weitere Antenne zum Empfangen wenigstens einer weiteren Frequenz ausgebildet ist. Auf diese Weise kann die Sicherheit bei Paketzustellungen verbessert werden, da Auslieferung eines Pakets mit Übergabe als zweistufige Prozesse realisiert werden können: Der Zusteller kann das Paket in seinem Fahrzeug über ein erstes Signal identifizieren, der Empfänger kann über ein zweites Signal den Empfang bestätigen. So kann sichergestellt werden, dass auch nur der vorgesehene Empfänger das Paket entgegen nehmen kann, da nur dieser über das spezifische zweite Signal verfügt. Darüber hinaus können die Antennen jeweils unterschiedlich zueinander im Raum orientiert sein, sodass die Wahrscheinlichkeit steigt, dass die Antennen gut empfangen bzw. senden können.

Bevorzugt ist die Identifizierungseinheit als stromloser Transponder ausgebildet. Dies hat den Vorteil, dass die Kosten bei der Herstellung besonders gering gehalten werden können, da kein zusätzlicher Energiespeicher notwendig ist. Da kein Energiespeicher mit einem Energievorrat notwendig ist, kann die Identifizierungseinheit vielseitiger und auch öfter eingesetzt werden. Auch langfristig kann so Geld gespart werden, da bei wiederholtem Gebrauch der Identifizierungseinheit auch kein Energiespeicher ersetzt werden muss.

Die für die Aktivierung der Statusanzeige und damit der angezeigten Statusänderung benötigte Energie kann mittels elektromagnetischer Wellen, wie es etwa bei RFID-Techniken bereits genutzt wird, übertragen werden.

Bevorzugt ist die Identifizierungseinheit haftend und/oder klebend ausgebildet. So kann die Identifizierungseinheit einfach als Etikett auf bereits vorhandene Umschläge, Paketkartons oder andere Erst- und Zweitverpackungen angebracht werden. Auch andere Anbringungsarten sind denkbar.

Denkbar ist, dass die Identifizierungseinheit mit einer zusätzlichen Codierung versehen ist, um eine Zuordnung der Codierung zu einer Person und/oder einer Adresse in einer externer Datenbank herzustellen, insbesondere ein Barcode, ein 2D-Code, ein Nummern- und/oder Buchstabencode oder eine elektronische Codierung zur zusätzlichen Identifizierung. Mittels eines solchen Codes kann eine weitere Sicherheitsstufe bei der Auslieferung eines Briefs oder Pakets an einen spezifischen Empfänger verwirklicht werden, da nur dieser über die entsprechende Codierung zum Empfang berechtigt ist. Auch ein gestohlenes Etikett ermöglicht es dann nicht ohne Weiteres, die persönlichen Daten von Absender oder Empfänger auszulesen. Diese sind in einer separaten Datenbank gespeichert, auf die allein mit dem Etikett nicht zugegriffen werden kann. Zur Verifizierung des Empfängers respektive zur zusätzlichen Sicherheit in der Prozesskette kann die Identifizierungseinheit Blockchain-Technologie verwenden.

Bevorzugt sind die Komponenten der Identifizierungseinheit biologisch abbaubar ausgebildet, also durch biologischen Abbau aus der Umwelt entfernt und dem mineralischen Stoffkreislauf zugeführt werden können.

Ein erfindungsgemäßes Logistikobjekt zeichnet sich dadurch aus, dass eine Identifizierungseinheit daran so angebracht und/oder integriert ist, dass sie sich über eine Kante hinweg erstreckt und/oder gleichzeitig auf wenigstens zwei Seiten angeordnet ist. Die Identifizierungseinheit kann dabei beispielsweise aufgedruckt, aufgeklebt oder in die Primär-oder Sekundärverpackung integriert sein. Sind flache Logistikobjekte wie Briefe oder dergleichen z.B. wie Karteikarten bzw. als Stapel angeordnet, ist dieses sofort durch die Anbringung über die Kante hinweg sichtbar.

Ein erfindungsgemäßes Signalübertragungssystem, umfassend ein Sendemodul zum Senden von Signalen, ein Empfangsmodul zum Empfangen von Signalen und/oder eine Datenbank zur Zuordnung von Codierungen zu einer Person und/oder einer Adresse, ist dadurch gekennzeichnet, dass das Empfangsmodul eine Identifizierungseinheit nach einem der vorgenannten Ansprüche und/oder ein Logistikobjekt nach einem der vorgenannten Ansprüche umfasst. Die Energie wird dabei von der Antenne dem elektromagnetischen Feld des ausgesandten Signals entnommen und als Kapazität in der Identifizierungseinheit gespeichert. Die dabei entstehende Änderung des elektromagnetischen Felds kann vom Empfangsmodul eindeutig der Identifizierungseinheit bzw. dem Logistikobjekt zugeschrieben werden.

Die Codierung kann beispielsweise als Barcode, Nummerncode, Zeichencode oder QR-Code ausgebildet sein. Beim Scannen der Codierung der Identifizierungseinheit mittels Sendemoduls wird über eine Datenbank Daten wie beispielsweise der Name des Empfängers oder ein Verifizierungscode, der dem Empfänger bekannt ist, an ein Empfangsmodul gesendet, welches auch mit dem Sendemodul kombiniert sein kann. Dies kann zum einen dazu genutzt werden, eine zusätzliche Sicherheitsstufe in den Prozess der Paketübergabe einzubauen, und zum anderen auch dem Datenschutz dienlich sein, da keine persönlichen Daten auf dem Paket zu finden sein müssen. Lediglich beim Scannen der Codierung durch berechtigte Personen werden die jeweiligen Daten angezeigt.

Die Identifizierungseinheit kann sich beispielsweise über ein EDV-System identifizieren lassen, wobei sich der Identifizierungsprozess entweder manuell von einer Person wie einem Logistiker, oder vom EDV-System selbst auflösen lässt. Die Fehlerquote im Prozess kann so optimiert werden.

Es ist weiter denkbar, dass die Identifizierungseinheit von einem Kamerasystem, welches mit dem EDV-System gekoppelt ist, erfasst werden kann. So können Ort, Lagebestimmung und Identifizierung automatisiert bestimmt werden, wodurch menschliche Fehler ausgeschlossen werden können.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: einen schematischen Aufbau einer Identifizierungseinheit gemäß der Erfindung,
- Figur 2: einen schematischen Aufbau einer Identifizierungseinheit gemäß Figur 1 mit sichtbaren Antennen,
- Figur 3: ein Logistikobjekt mit Identifizierungseinheit gemäß Figur 1,
- Figur 4: einen weiteren schematischen Aufbau einer Identifizierungseinheit gemäß der Erfindung
- Figur 5: ein Logistikobjekt mit Identifizierungseinheit gemäß Figur 4,
- Figur 6: einen Briefumschlag mit einer weiteren Ausführung einer Identifizierungseinheit gemäß der Erfindung und
- Figur 7: einen mit einer weiteren Ausführung einer Identifizierungseinheit gemäß Figur 6 aus Blickrichtung A.

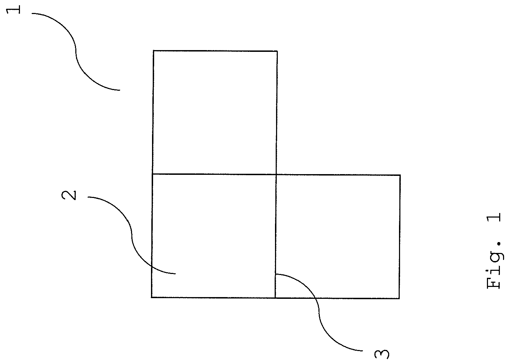

In Figur 1 ist eine Identifizierungseinheit 1 schematisch dargestellt. Im Wesentlichen ist an der Oberfläche eine Statusanzeige 2 angebracht, welche schaltbar ausgebildet ist. Idealerweise ist diese Statusanzeige 2 als passive Anzeigetechnik ausgebildet, die insbesondere das Umgebungslicht reflektiert. Nach Aktivieren eines Statuswechsels an der Statusanzeige 2 verändert die Statusanzeige 2, die auf e-Paper-Technik basieren kann, ihre optische Eigenschaft, sodass ein Farb- und/oder Helligkeitswechsel erfolgt.

Die Identifizierungseinheit 1 kann beispielsweise als Etikett auf ein Paket oder anderes Logistikobjekt 5 angebracht werden. Dabei ist es sinnvoll, die Identifizierungseinheit 1 an mehreren Seitenflächen des Logistikobjekts 5 anzubringen, sodass die Identifizierungseinheit aus mehreren Richtungen gleichzeitig wahrgenommen werden kann.

Zur einfacheren Anbringung der Identifizierungseinheit 1 an einem Paket oder einem anderen Logistikobjekt 5 ist es sinnvoll, bei der Herstellung bereits Sollknickstellen 3 an der Identifizierungseinheit 1 anzubringen, welche bei der Anbringung an den Kanten des Logistikobjekts 5 ausgerichtet werden.

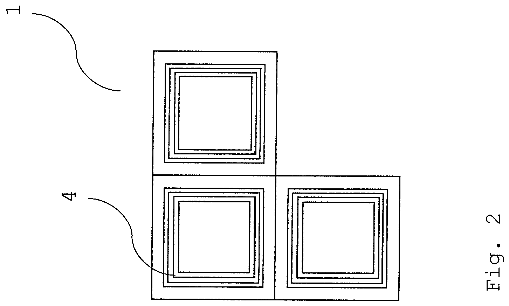

Figur 2 zeigt eine Identifizierungseinheit 1 aus Figur 1 mit Antennen 4 als schematische Darstellung. Die Antennen 4 sind jeweils an den einzelnen Abschnitten der Identifizierungseinheit 1 angebracht, welche jeweils einzeln auf verschiedenen Seiten eines Logistikobjekts 5 angebracht sind. Denkbar ist jedoch auch, nur eine Antenne 4 über sämtliche Abschnitte der Identifizierungseinheit 1 anzubringen. Die Antennen 4 können sowohl auf als auch innerhalb der Identifizierungseinheit 1 angeordnet sein.

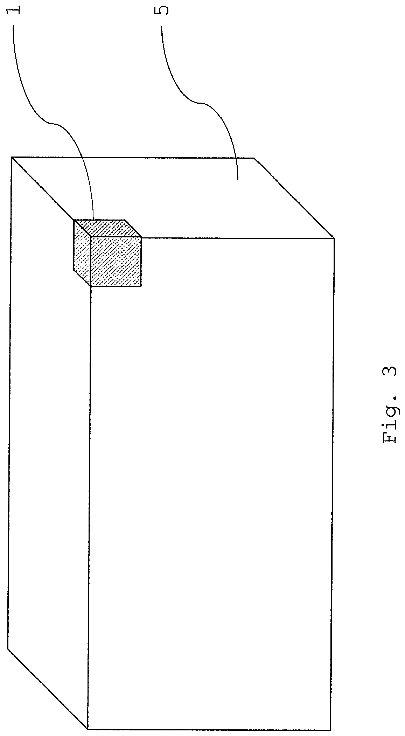

In Figur 3 ist eine mögliche Anbringung einer Identifizierungseinheit 1 an einem Logistikobjekt 5 dargestellt. Die Identifizierungseinheit 1 ist dabei an einer Ecke des Logistikobjekts 5 angeordnet, wobei die Identifizierungseinheit 1 an drei Seiten angebracht ist. So ist die Identifizierungseinheit 1 aus mehreren Richtungen gleichzeitig wahrnehmbar. Unabhängig von der Orientierung des Logistikobjekts 5 beispielsweise in einem Lagerregal kann so immer eine mit einem Abschnitt der Identifizierungseinheit 1 versehenen Fläche des Logistikobjekts 5 einsehbar platziert werden.

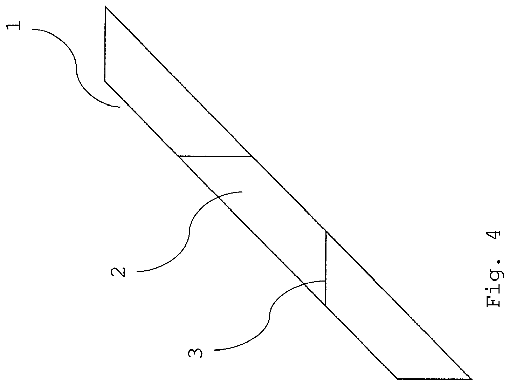

Figur 4 zeigt eine weitere mögliche Ausführung der Erfindung. Die Identifizierungseinheit 1 kann auch als Streifen ausgebildet sein, der über Eck an mehreren Seiten eines Logistikobjekts 5 angebracht werden kann. Auch hier können vorgefertigte Sollknickstellen 3 angebracht sein.

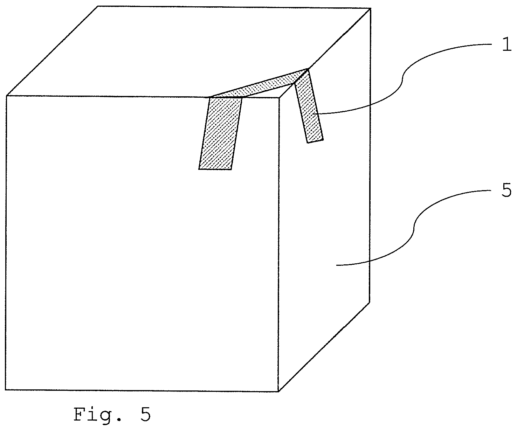

In Figur 5 ist dargestellt, wie eine Identifizierungseinheit 1 aus Figur 4 an einem Logistikobjekt 5 angebracht werden kann. Auch hier sind wieder drei Flächen des Logistikobjekts 5 mit jeweils einem Abschnitt der Identifizierungseinheit 1 versehen.

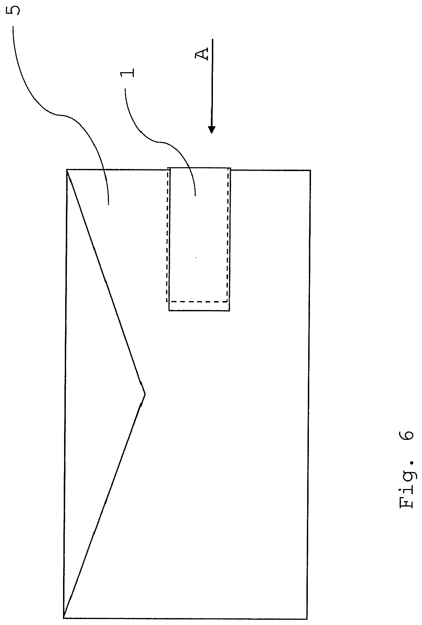

Bei im Wesentlichen zweidimensionalen Logistikobjekten 5 wie Briefumschlägen kann, wie in Figur 6 dargestellt, die Identifizierungseinheit 1 über Kante an dem Logistikobjekt 5 angebracht sein.

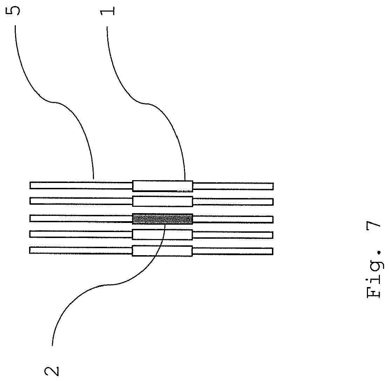

In Figur 7 ist dargestellt, wie mehrere Logistikobjekte 5 mit Identifizierungseinheit 1 aus Figur 6 in Blickrichtung A als Stapel angeordnet sein können. Wenn ein Statuswechsel einer Identifizierungseinheit 1 aktiviert wird, so ist die Statusanzeige 2 nach Farbwechsel auch innerhalb eines Stapels erkennbar und das gesuchte Logistikobjekt leicht zu identifizieren.

### Bezugszeichenliste

- 1: Identifizierungseinheit
- 2: Statusanzeige
- 3: Sollknickstelle
- 4: Antenne
- 5: Logistikobjekt
- A: Blickrichtung

## Patentansprüche

1. Identifizierungseinheit (1) zur Anbringung an einem Logistikobjekt (5), Brief oder Paket mit wenigstens einer schaltbaren optischen Statusanzeige, **dadurch gekennzeichnet, dass** die Identifizierungseinheit (1) derart ausgebildet ist, dass die Statusanzeige (2) wenigstens auf zwei Seiten gleichzeitig und/oder über wenigstens eine Kante des Logistikobjekts (5), Briefs oder Pakets anordenbar ist.

2. Identifizierungseinheit (1) nach einem der vorgenannten Ansprüche, **dadurch gekennzeichnet, dass** wenigstens eine Sollknickstelle (3) vorgesehen ist, um an der Kante des Logistikobjekts (5) angeordnet zu werden.

3. Identifizierungseinheit (1) nach einem der vorgenannten Ansprüche, **dadurch gekennzeichnet, dass** die optische Statusanzeige (2) binär schaltbar und als passive Anzeigetechnik, insbesondere das Umgebungslicht reflektierend, ausgebildet ist.

4. Identifizierungseinheit (1) nach einem der vorgenannten Ansprüche, **dadurch gekennzeichnet, dass** die optische Statusanzeige (2) dazu ausgebildet ist, eine Farbveränderung und/oder einen Helligkeitswechsel darzustellen, um einen Statuswechsel anzuzeigen, wobei die Statusanzeige (2) kontaktlos, insbesondere durch elektromagnetische Wellen, aktivierbar ist.

5. Identifizierungseinheit (1) nach einem der vorgenannten Ansprüche, **dadurch gekennzeichnet, dass** die Statusanzeige (2) wenigstens eine Antenne (4), insbesondere eine Loopantenne, zur Signalaufnahme und zur Aktivierung aufweist, wobei die Antenne (4) insbesondere in die Identifizierungseinheit (1) integriert ist.

6. Identifizierungseinheit (1) nach einem der vorgenannten Ansprüche, **dadurch gekennzeichnet, dass** in wenigstens zwei Abschnitten der Identifizierungseinheit (1), welche jeweils auf wenigstens einer Seite des Logistikobjekts (5), Briefs oder Pakets angebracht sind, wenigstens eine Antenne (4) zur Signalaufnahme vorgesehen ist, insbesondere eine gemeinsame Antenne (4) über wenigstens zwei der Seiten.

7. Identifizierungseinheit (1) nach einem der vorgenannten Ansprüche, **dadurch gekennzeichnet, dass** die Identifizierungseinheit (1) derart ausgebildet ist, dass die zur Anzeige eines Statuswechsels an der optischen Statusanzeige (2) benötigte Energie über die wenigstens eine Antenne (4) aufgenommen wird.

8. Identifizierungseinheit (1) nach einem der vorgenannten Ansprüche, **dadurch gekennzeichnet, dass** die Identifizierungseinheit (1):
- mit einem RFID-Chip ausgestattet ist und/oder
- mit einem Energiespeicher ausgestattet ist, welcher kontaktlos ladbar ausgebildet ist, und/oder
- als stromloser Transponder ausgebildet ist.

9. Identifizierungseinheit (1) nach einem der vorgenannten Ansprüche, **dadurch gekennzeichnet, dass** ein Signalgeber für akustische Signale vorgesehen ist, der dazu ausgebildet ist, bei Statusänderung ein akustisches Signal zu erzeugen.

10. Identifizierungseinheit (1) nach einem der vorgenannten Ansprüche, **dadurch gekennzeichnet, dass** die Identifizierungseinheit (1) wenigstens eine weitere Antenne (4) umfasst, wobei die wenigstens eine weitere Antenne (4) zum Empfangen wenigstens einer weiteren Frequenz ausgebildet ist.

11. Identifizierungseinheit(1) nach einem der vorgenannten Ansprüche, **dadurch gekennzeichnet, dass** die Identifizierungseinheit (1) haftend und/oder klebend ausgebildet ist.

12. Identifizierungseinheit (1) nach einem der vorgenannten Ansprüche, **dadurch gekennzeichnet, dass** die Identifizierungseinheit (1) mit einer Codierung versehen ist, um eine Zuordnung der Codierung zu einer Person und/oder einer Adresse in einer externer Datenbank herzustellen, insbesondere ein Barcode, ein 2D-Code oder eine elektronische Codierung zur zusätzlichen Identifizierung.

13. Identifizierungseinheit (1) nach einem der vorgenannten Ansprüche, **dadurch gekennzeichnet, dass** die Komponenten der Identifizierungseinheit (1) biologisch abbaubar ausgebildet sind.

14. Logistikobjekt (5), **dadurch gekennzeichnet, dass** eine Identifizierungseinheit (1) nach einem der vorgenannten Ansprüche daran so angebracht und/oder integriert ist, dass sie sich über eine Kante hinweg erstreckt und/oder gleichzeitig auf wenigstens zwei Seiten angeordnet ist.

15. Signalübertragungssystem, umfassend ein Sendemodul zum Senden von Signalen, ein Empfangsmodul zum Empfangen von Signalen und/oder eine Datenbank zur Zuordnung von Codierungen zu einer Person und/oder einer Adresse, **dadurch gekennzeichnet, dass** das Empfangsmodul eine Identifizierungseinheit (1) nach einem der vorgenannten Ansprüche und/oder ein Logistikobjekt (5) nach einem der vorgenannten Ansprüche umfasst, wobei insbesondere die Identifizierungseinheit (1) separat von der Datenbank ausgebildet ist und außer der Codierung keine aus der Datenbank zugeordneten Informationen enthält.

## Geänderte Patentansprüche

### Geänderte Patentansprüche gemäss Regel 137(2) EPÜ.

1. Identifizierungseinheit (1) zur Anbringung an einem Logistikobjekt (5), Brief oder Paket, wobei die Identifizierungseinheit wenigstens eine schaltbare optische Statusanzeige umfasst, **dadurch gekennzeichnet, dass** die Identifizierungseinheit (1) derart ausgebildet ist, dass die Statusanzeige (2) wenigstens eine Antenne (4), insbesondere eine Loopantenne, zur Signalaufnahme und zur Aktivierung aufweist, wobei die Antenne (4) insbesondere in die Identifizierungseinheit (1) integriert ist, und wobei die Statusanzeige (2) wenigstens auf zwei Seiten gleichzeitig und/oder über wenigstens eine Kante des Logistikobjekts (5), Briefs oder Pakets anordenbar ist.

2. Identifizierungseinheit (1) nach einem der vorgenannten Ansprüche, **dadurch gekennzeichnet, dass** wenigstens eine Sollknickstelle (3) vorgesehen ist, um an der Kante des Logistikobjekts (5) angeordnet zu werden.

3. Identifizierungseinheit (1) nach einem der vorgenannten Ansprüche, **dadurch gekennzeichnet, dass** die optische Statusanzeige (2) binär schaltbar und als passive Anzeigetechnik, insbesondere das Umgebungslicht reflektierend, ausgebildet ist.

4. Identifizierungseinheit (1) nach einem der vorgenannten Ansprüche, **dadurch gekennzeichnet, dass** die optische Statusanzeige (2) dazu ausgebildet ist, eine Farbveränderung und/oder einen Helligkeitswechsel darzustellen, um einen Statuswechsel anzuzeigen, wobei die Statusanzeige (2) kontaktlos, insbesondere durch elektromagnetische Wellen, aktivierbar ist.

5. Identifizierungseinheit (1) nach einem der vorgenannten Ansprüche, **dadurch gekennzeichnet, dass** in wenigstens zwei Abschnitten der Identifizierungseinheit (1), welche jeweils auf wenigstens einer Seite des Logistikobjekts (5), Briefs oder Pakets angebracht sind, wenigstens eine Antenne (4) zur Signalaufnahme vorgesehen ist, insbesondere eine gemeinsame Antenne (4) über wenigstens zwei der Seiten.

6. Identifizierungseinheit (1) nach einem der vorgenannten Ansprüche, **dadurch gekennzeichnet, dass** die Identifizierungseinheit (1) derart ausgebildet ist, dass die zur Anzeige eines Statuswechsels an der optischen Statusanzeige (2) benötigte Energie über die wenigstens eine Antenne (4) aufgenommen wird.

7. Identifizierungseinheit (1) nach einem der vorgenannten Ansprüche, **dadurch gekennzeichnet, dass** die Identifizierungseinheit (1):
- mit einem RFID-Chip ausgestattet ist und/oder
- mit einem Energiespeicher ausgestattet ist, welcher kontaktlos ladbar ausgebildet ist, und/oder
- als stromloser Transponder ausgebildet ist.

8. Identifizierungseinheit (1) nach einem der vorgenannten Ansprüche, **dadurch gekennzeichnet, dass** ein Signalgeber für akustische Signale vorgesehen ist, der dazu ausgebildet ist, bei Statusänderung ein akustisches Signal zu erzeugen.

9. Identifizierungseinheit (1) nach einem der vorgenannten Ansprüche, **dadurch gekennzeichnet, dass** die Identifizierungseinheit (1) wenigstens eine weitere Antenne (4) umfasst, wobei die wenigstens eine weitere Antenne (4) zum Empfangen wenigstens einer weiteren Frequenz ausgebildet ist.

10. Identifizierungseinheit(1) nach einem der vorgenannten Ansprüche, **dadurch gekennzeichnet, dass** die Identifizierungseinheit (1) haftend und/oder klebend ausgebildet ist.

11. Identifizierungseinheit (1) nach einem der vorgenannten Ansprüche, **dadurch gekennzeichnet, dass** die Identifizierungseinheit (1) mit einer Codierung versehen ist, um eine Zuordnung der Codierung zu einer Person und/oder einer Adresse in einer externer Datenbank herzustellen, insbesondere ein Barcode, ein 2D-Code oder eine elektronische Codierung zur zusätzlichen Identifizierung.

12. Identifizierungseinheit (1) nach einem der vorgenannten Ansprüche, **dadurch gekennzeichnet, dass** die Komponenten der Identifizierungseinheit (1) biologisch abbaubar ausgebildet sind.

13. Logistikobjekt (5), **dadurch gekennzeichnet, dass** eine Identifizierungseinheit (1) nach einem der vorgenannten Ansprüche daran so angebracht und/oder integriert ist, dass sie sich über eine Kante hinweg erstreckt und/oder gleichzeitig auf wenigstens zwei Seiten angeordnet ist.

14. Signalübertragungssystem, umfassend ein Sendemodul zum Senden von Signalen, ein Empfangsmodul zum Empfangen von Signalen und/oder eine Datenbank zur Zuordnung von Codierungen zu einer Person und/oder einer Adresse, **dadurch gekennzeichnet, dass** das Empfangsmodul eine Identifizierungseinheit (1) nach einem der vorgenannten Ansprüche und/oder ein Logistikobjekt (5) nach einem der vorgenannten Ansprüche umfasst, wobei insbesondere die Identifizierungseinheit (1) separat von der Datenbank ausgebildet ist und außer der Codierung keine aus der Datenbank zugeordneten Informationen enthält.
